# FASCICULE DE BREVET EUROPEEN

(11) **EP 1 721 698 B1**
(45) Date de publication et mention de la délivrance du brevet: **26.11.2008**
(21) Numéro de dépôt: 06113599.2
(22) Date de dépôt: 05.05.2006
(51) Int. Cl.: B23P 15/04, B23P 6/00, F01D 5/00

(54) **Procédé de fabrication d'une aube creuse comportant un sommet en forme de baignoire, procédé de réparation d'une telle aube**
Herstellungsverfahren für eine Hohlschaufel mit Schaufelspitze und Reparaturverfahren für eine solche Schaufel
Method of manufacturing a hollow blade comprising a squealer tip and method of repairing such a blade

(30) Priorité: 09.05.2005 FR 0504648
(43) Date de publication de la demande: 15.11.2006
(73) Titulaire: SNECMA SERVICES, 75015 Paris (FR)
(72) Inventeur: Boulnois, Michel, 77127 Lieusaint (FR); Pagnon, Claude, 17640 Vaux sur Mer (FR)
(74) Mandataire: David, Daniel

(56) Documents cités:
- WO-A-97/37800
- US-A- 4 487 550
- US-A- 5 359 770
- US-A- 5 822 852
- US-A- 6 093 368
- US-A1- 2003 082 053
- US-A1- 2003 118 448
- US-A1- 2005 091 848
- US-B1- 6 332 272

## Description

L'invention concerne un procédé de fabrication d'une aube métallique creuse comportant au moins une paroi latérale et un sommet en forme de baignoire et un procédé de réparation d'une telle aube, selon les préambules des revendications 1 et 7. De tels procédés sont décrits dans le document US-4,487,550..

Certaines aubes d'un turboréacteur sont creuses et comportent un sommet en forme de baignoire, c'est-à-dire dont les parois forment une cuvette comportant un fond. Ces aubes sont fabriquées en fonderie. Selon un mode de réalisation connu, un noyau est suspendu par deux fils de platine dans un moule et le métal est coulé dans le moule autour du noyau, formant les parois de l'aube et un sommet en forme de baignoire. Le noyau est alors supprimé, par exemple par dissolution.

Du fait de la suspension du noyau par les fils de platine, le fond de la baignoire comporte des trous, qu'il faut boucher, par exemple en y brasant des bouchons de forme tronconique, ce qui complique le procédé de fabrication. De plus, ce brasage peut ne pas être parfait et induire des imperfections dans la baignoire. En cas de problème lors du brasage, il est parfois nécessaire de mettre en oeuvre plusieurs cycles de brasage ; ces derniers se font à 1200°C et induisent une augmentation des phases cristallines dites "gammas primes" dans l'alliage formant l'aube, ce qui réduit sa durée de vie. Par ailleurs, le noyau étant suspendu par les fils, sa position n'est pas parfaitement maîtrisée et les parois latérales de l'aube ainsi que le fond de la baignoire présentent le risque de ne pas être formés avec l'épaisseur requise ; il est donc nécessaire de tolérer des jeux en fabrication importants.

La présente invention vise à pallier ces inconvénients.

A cet effet, l'invention concerne un procédé de fabrication d'une aube métallique creuse, comportant au moins une paroi latérale et un sommet en forme de baignoire, caractérisé par le fait que :
a) on fabrique par fonderie une aube creuse, comportant au moins une paroi latérale, et dont le sommet est ouvert ;
b) on fabrique une plaque d'un matériau stratifié comportant au moins le métal de l'aube et un matériau de brasure ;
c) on brase la plaque sur le sommet de la paroi latérale de l'aube par mise sous pression de la plaque sur l'aube et
d) on usine la baignoire, comportant au moins un fond et au moins un rebord, dans la plaque.

Grâce à l'invention, l'aube étant préalablement fabriquée avec un sommet ouvert, le noyau peut être maintenu, lors de cette opération de fonderie, par le haut, avec des moyens choisis avec toute la liberté que procure cette ouverture, ce qui permet d'assurer une grande précision dans le positionnement du noyau et donc dans l'épaisseur des parois de l'aube. Le fond de la baignoire ne comportant pas de bouchon brasé, l'aube n'est pas soumise à des opérations de brasage, ce qui évite tous les inconvénients qui y sont liés et augmente la durée de vie de l'aube.

Un autre avantage de l'invention est notable. Les parois des aubes comportent généralement des trous de refroidissement, effectués par perçage laser une fois les parois des aubes formées. La protection de l'aube lors de ce perçage était complexe à mettre en oeuvre pour les aubes de l'art antérieur, dans la mesure où l'intérieur de l'aube n'était pas aisément accessible du fait de la présence de la baignoire formée lors de l'opération de fonderie. Grâce à l'invention, il est possible de pratiquer ce perçage avant le brasage de la plaque de matériau stratifié, l'intérieur de l'aube étant alors aisément accessible pour venir y placer une plaque de protection, par exemple. L'intérieur de l'aube est par ailleurs disponible pour venir procéder à un usinage ou un nettoyage de ses parois intérieures.

Avantageusement, avant l'étape c), on rectifie le sommet de la paroi de l'aube.

Ainsi, le sommet des parois étant usiné, le brasage du matériau stratifié sur ce sommet se fait à une hauteur parfaitement déterminée, ce qui permet de régler avec précision la position de la surface interne du fond de la baignoire, dont la surface externe est ensuite usinée de manière classique et maîtrisée.

Le procédé décrit ci-dessus s'adapte tout à fait à un procédé de réparation, et c'est ainsi que l'invention concerne également un procédé de réparation du sommet d'une aube métallique creuse, comportant au moins une paroi latérale et un sommet en forme de baignoire, qui comprend au moins un fond et au moins un rebord, caractérisé par le fait que qu'il comporte les étapes du procédé de fabrication décrit ci-dessus, dans lequel l'étape a) est remplacée par l'étape suivante :
a') on découpe le sommet de l'aube au niveau du fond de sa baignoire de sorte à obtenir une aube, comportant au moins une paroi latérale, et dont le sommet est ouvert.

L'invention sera mieux comprise à l'aide de la description suivante de la forme de réalisation préférée des procédés et de l'aube de l'invention, en référence aux planches annexées, sur lesquelles :
- la figure 1 représente une vue en perspective schématique d'une aube creuse obtenue grâce au procédé de fabrication d'une aube de l'invention ;
- la figure 2 représente une vue en coupe de l'aube de la figure 1 ;
- la figure 3 représente une vue en coupe schématique d'un sommet d'aube ouvert de l'étape a) du procédé de fabrication de l'invention et
- la figure 4 représente une vue en coupe schématique d'une aube dans l'étape c) du procédé de fabrication de l'invention.

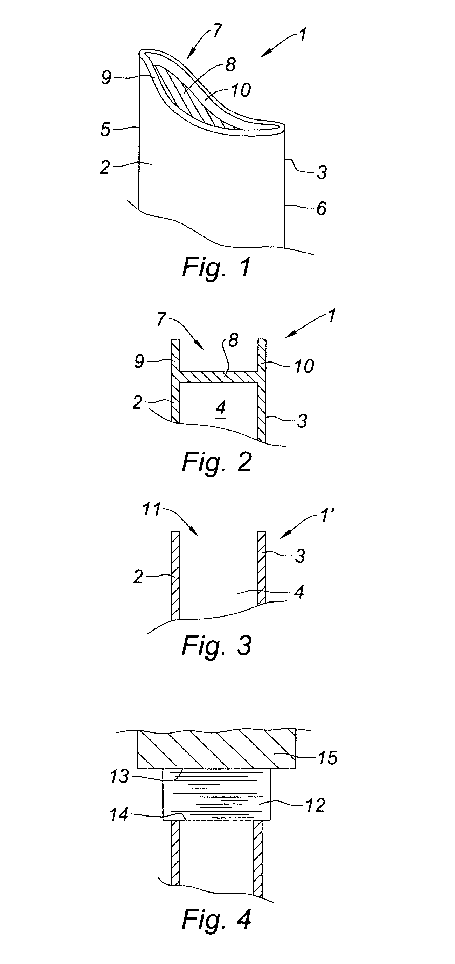

En référence aux figures 1 et 2, le procédé de fabrication selon l'invention d'une aube vise à fabriquer une aube 1, en l'espèce une aube 1 mobile d'un turboréacteur. Par interne et externe, on entendra interne et externe par rapport à l'axe du turboréacteur dans lequel l'aube est destinée à être montée radialement. L'aube 1 est une aube creuse, qui comporte du côté interne une portion de pied, non représentée, à partir de laquelle s'étendent les deux parois latérales 2, 3 intrados et extrados définissant entre elles une cavité 4. La cavité 4 est utilisée pour le refroidissement de l'aube 1, et peut comporter des éléments, par exemple des picots ou des ailettes de refroidissement, participant à cette fonction. L'aube 1 est ici présentée avec deux parois 2, 3, mais elle peut comporter des cloisons, définissant entre elles une pluralité de cavités.

L'aube 1 comporte, de son côté externe, un sommet en forme de baignoire 7. Cette baignoire 7 comporte une paroi de fond 8, s'étendant transversalement entre les parois latérales 2, 3 et remplissant tout ou partie de l'ouverture entre les deux. A partir de la paroi de fond 8, s'étendent deux parois formant rebords 9, 10, qui de la même façon que précédemment se rejoignent aux bords d'attaque 5 et de fuite 6 de l'aube 1. Ces rebords 9, 10 s'étendent ici dans le prolongement des parois latérales 2, 3 de l'aube 1 et présentent la même épaisseur qu'elles.

Le procédé de l'invention, de fabrication de l'aube 1, va maintenant être décrit.

En référence à la figure 3, on fabrique tout d'abord une aube 1', creuse, comportant une portion de pied, non représentée, à partir de laquelle s'étendent deux parois latérales 2, 3 et dont le sommet 11 est ouvert. Autrement dit, les parois latérales 2, 3 forment une cavité 4 qui est ouverte au niveau de leur extrémité externe. L'aube 1' est fabriquée par fonderie : le métal est coulé dans un moule, dans lequel est maintenu en suspension un noyau de céramique, le métal s'insérant entre le noyau et les parois du moule pour former les parois 2, 3 de l'aube 1'. Le sommet 11 de l'aube l' étant ouvert, il est aisé de maintenir le noyau par des moyens mécaniques rigides, éventuellement volumineux, par cette ouverture, afin de s'assurer du positionnement correct et constant, tout au long du procédé, du noyau par rapport au moule. La précision est plus grande que dans l'art antérieur, où le noyau était suspendu par des fils et présentait un risque de flottement. De plus, le noyau peut aisément être enlevé, en fin de procédé de fonderie, du côté ouvert de l'aube 1'.

L'invention s'applique particulièrement à une aube l'constituée d'un alliage à base de Nickel dénommé AM1. Cette alliage est de composition pondérale : Co de 6,0 à 7,0%, Cr de 7,0 à 8,0%, Mo de 1,8 à 2,2%, W de 5,0 à 6,0%, Ta de 7,5 à 8,5%, A1 de 5,1 à 5,5%, Ti de 1,0 à 1,4%, Nb, Mn et Si chacun inférieur à 0,05%, C, B, Cu, P, S, Mg, Sn et Zr chacun inférieur à 0,01%, Hf et Fe chacun inférieur à 0,2% et Ni qui complète à 100%.

On obtient une aube 1' qui comporte donc une portion de pied, du côté interne, deux parois latérales s'étendant vers son sommet 11, du côté externe, qui est ouvert.

Il est possible de former, sur les parois 2, 3, des trous de refroidissement, pour l'évacuation de l'air de refroidissement. Ces trous sont généralement obtenus par perçage laser. Puisque le sommet 11 de l'aube 1' est ouvert, il est aisé de venir placer des plaques de protection à l'intérieur de l'aube 1, afin de stopper le faisceau laser qui a traversé une paroi 2, 3 de l'aube 1'.

Par ailleurs, il est possible de venir usiner ou nettoyer l'intérieur de l'aube ouverte 1'.

Les parois latérales 2, 3 de l'aube sont ensuite rectifiées par usinage, c'est-à-dire qu'elle sont découpées et polies de manière à s'élever jusqu'à une hauteur désirée, en l'espèce à la hauteur à laquelle on souhaite que s'étende la paroi interne du fond 8 de la baignoire 7. Cette rectification étant effectuée par usinage, elle est très précise. Cette rectification n'est pas nécessaire dans le cas où le procédé de fonderie permettrait de former, très précisément, les parois 2, 3.

En référence à la figure 4, on fabrique par ailleurs une plaque 12, de matériau stratifié. Une telle plaque 12 comporte différentes couches de matériaux mélangés, dont les concentrations relatives en matériaux de base varient dans l'épaisseur de la plaque 12. Dans le cas d'espèce considéré, la plaque comporte de l'alliage AM1 et un matériau de brasure, par exemple à base de Nickel, de Chrome ou de Bore. Une première face 13 de la plaque comporte une concentration en AM1 égale à 100%, la face opposée 14 comportant une concentration en matériau de brasure égale à 100%. Entre ces deux faces 13, 14, les concentrations décroissent et croissent, respectivement, pour représenter, pour chaque matériau, 100% d'un côté et 0% de l'autre. Ces concentrations extrêmes pourraient ne pas être égales à 100% et 0%, mais globalement, la plaque 12 comporte une face fortement concentrée en un matériau et l'autre face fortement concentrée en l'autre matériau, l'évolution des concentrations évoluant linéairement ou non entre les deux faces. Typiquement, la plaque 12 est fabriquée par projection de poudre sur un support en acier, la concentration de la poudre, en AM1 et en matériau de brasure, évoluant au fur et à mesure de l'épaisseur formée. Ces stratifiés sont bien connus de l'homme du métier et leur fabrication ne sera pas détaillée plus avant. Le stratifié 12 peut avoir été fabriqué avant, pendant ou après la fabrication de l'aube ouverte 1', sa fabrication se faisant de manière indépendante.

La plaque de stratifié 12 est d'une épaisseur au moins égale à la hauteur du fond 8 et des rebords 9, 10 de la baignoire 7 de l'aube 1 que l'on souhaite fabriquer. Les dimensions de sa section, transversale à la direction de son épaisseur, sont légèrement supérieures à la section de l'aube ouverte l'au niveau de son sommet 11, et correspondent donc à la forme et aux dimensions de la baignoire 7, légèrement augmentées. Le découpage de la plaque 12 est préférentiellement effectué par jet d'eau, de manière bien connue de l'homme du métier, afin d'éviter la création de zones perturbées dans la plaque 12.

L'étape suivante de fabrication de l'aube 1, à savoir le brasage de la plaque 12 sur l'aube ouverte 1', est alors mise en oeuvre. A cet effet, on met en contact la plaque 12, par sa face 14 contenant une concentration de 100% en brasure, sur le sommet 11 de l'aube ouverte 1'. Sur l'autre face 13, on met en appui un vérin 15, l'aube l' étant maintenue, par exemple sur une table de presse, à son extrémité interne. L'ensemble est contenu dans un four, ici à 1100°C, dans le vide ou une atmosphère neutre. Le choix de cette température se fait en fonction du matériau de l'aube 1'. En l'espèce, l'alliage AM1 présente une bonne structure interne à 1100°C, cette structure se dégradant de façon très notable à partir de 1200°C, d'où le choix de la température, guidé pas la volonté de ne pas entraver la durée de vie de l'aube 1. La plaque 12 est ainsi mise sous pression pendant quatre heures. Il se produit un "autobrasage" de la plaque 12 sur les parois 2, 3 de l'aube 1', le matériau de brasure contenu dans la plaque 12 étant brasé contre le sommet des parois 2, 3. En effet, du fait de la température et de la pression, une diffusion intermétallique s'opère entre la plaque 12 et les parois 2, 3 de l'aube 1', diffusion accélérée par la pression, résultant en un brasage des éléments. La pression mise en oeuvre est ici de 15 bars. Dans le cas d'espèce considéré, des butées en graphite sont prévues à côté de la plaque 12, à une altitude correspondant à la hauteur désirée pour la baignoire 7, afin d'éviter un écrasement de la plaque et/ou de l'aube 1' du fait de la forte pression.

Une fois la plaque 12 brasée sur l'aube 1', on usine la baignoire 7 dans la plaque 12 : on dit qu'on "défonce" la baignoire 7. A cet effet, la plaque 12 est soumise, par son côté externe, c'est-à-dire par le côté de la face 13 contenant 100% d'AM1, à un usinage par électroérosion afin de creuser la baignoire 7. Cet usinage est mis en oeuvre jusqu'à ce que la surface externe de la paroi de fond 8 de la baignoire 7 soit à la bonne hauteur et que les surfaces, situées du côté intérieur de l'aube 1, des rebords 9, 10 de la baignoire 7 soient convenablement formées. Un tel usinage par électroérosion est parfaitement maîtrisé et permet d'usiner la baignoire 7 de manière très précise. La surface interne de la paroi de fond 8 est quant à elle déjà à la bonne hauteur puisqu'elle a été brasée au niveau du sommet des parois latérales 2, 3 de l'aube ouverte 1', rectifiés à hauteur désirée, en tenant compte des déformations pouvant intervenir pendant le brasage.

On usine ensuite les surfaces des rebords 9, 10, situées du côté extérieur de l'aube 1, de façon à leur donner l'épaisseur voulue, en l'espèce de façon à ce que les surfaces extérieures des rebords 9, 10 s'étendent dans le prolongement des surfaces extérieures des parois latérales 2, 3.

Il est possible de venir percer des trous de refroidissement dans le fond 8 de la baignoire 7, de la même façon que dans l'art antérieur.

Enfin, on usine le sommet des rebords 9, 10 afin qu'ils se situent à la bonne hauteur. On obtient ainsi l'aube 1 des figures 1 et 2.

Cette aube 1 n'ayant pas été soumise à des opérations de brasage à 1200°C comme dans l'art antérieur, sa durée de vie est augmentée. L'épaisseur des différentes parois 2, 3, 8, 9, 10 est par ailleurs tout à fait maîtrisée.

Le procédé qui vient d'être décrit peut être adapté à la réparation d'un sommet d'aube 1. Dans un tel procédé de réparation, dans lequel on souhaite reformer un sommet d'aube abîmé, par exemple, on découpe le sommet de l'aube 1 de façon à obtenir une aube ouverte 1' semblable à celle de la figure 3, la hauteur des sommets des parois 2, 3 étant adaptée à la position que l'on souhaite donner au fond 8 de la baignoire 7. A partir de cette aube ouverte 1', le procédé de fabrication du sommet en baignoire 7 est alors rigoureusement identique à celui qui vient d'être décrit.

On peut noter un autre avantage de l'invention : lors du brasage de la plaque 12 sur l'aube ouverte 1', il est possible qu'un bourrelet apparaisse au niveau de la zone qui a été brasée. Un tel bourrelet, situé à l'intérieur de l'aube, n'influe pas sur son fonctionnement et peut donc être laissé en l'état. Un bourrelet, situé à l'extérieur de l'aube, peut être usiné par la suite, lors de l'usinage des surfaces externes des rebords de la baignoire. Ce bourrelet présente toutefois l'intérêt, avant d'être usiné, d'être le témoin que le brasage a bien eu lieu.

La plaque en stratifié qui a été présentée ne comporte que de l'AM1 et du matériau de brasure. L'avantage de l'utilisation d'un stratifié est la grande liberté qu'il octroie dans le choix des matériaux. Il est donc possible d'ajouter des matériaux, permettant de donner des caractéristiques supplémentaires à la baignoire. Par exemple, il est possible, du côté externe, de prévoir un matériau de revêtement pour prévenir les frottements de l'aube sur son carter de rétention, s'il y en a un.

## Revendications

1. Procédé de fabrication d'une aube métallique creuse (1), comportant au moins une paroi latérale (2, 3) et un sommet en forme de baignoire (7), **caractérisé par le fait que** :
a) on fabrique par fonderie une aube creuse (1'), comportant au moins une paroi latérale (2, 3), et dont le sommet est ouvert ;
b) on fabrique une plaque (12) d'un matériau stratifié comportant au moins le métal de l'aube (1') et un matériau de brasure ;
c) on brase la plaque (12) sur le sommet de la paroi latérale (2, 3) de l'aube (1') par mise sous pression de la plaque (12) sur l'aube (1') et
d) on usine la baignoire (7), comportant au moins un fond (8) et au moins un rebord (9, 10), dans la plaque (12).

2. Procédé selon la revendication 1, dans lequel, avant l'étape c), on rectifie le sommet de la paroi (2, 3) de l'aube (1').

3. Procédé selon l'une des revendications 1 et 2, dans lequel, après l'étape d), on usine la surface extérieure du rebord (9, 10).

4. Procédé selon l'une des revendications 1 à 3, dans lequel, après l'étape d), on usine le sommet du rebord (9, 10).

5. Procédé selon l'une des revendications 1 à 4, dans lequel l'étape d) est effectuée par électroérosion.

6. Procédé selon l'une des revendications 1 à 5, dans lequel l'aube (1) est en alliage de Nickel.

7. Procédé de réparation du sommet d'une aube métallique creuse (1), comportant au moins une paroi latérale (2, 3) et un sommet en forme de baignoire (7), qui comprend au moins un fond (8) et au moins un rebord (9, 10), **caractérisé par le fait qu'**il comporte les étapes du procédé de fabrication de l'une des revendications 1 à 6, dans lequel l'étape a) est remplacée par l'étape suivante :
a') on découpe le sommet de l'aube (1) au niveau du fond (8) de sa baignoire (7) de sorte à obtenir une aube (1'), comportant au moins une paroi latérale (2, 3), et dont le sommet est ouvert.

## Claims

1. Method of manufacturing a hollow metal blade (1), comprising at least one side wall (2, 3) and a recessed tip cap (7), **characterized in that**:
a) a hollow blade (1'), which comprises at least one side wall (2, 3) and the tip of which is open, is manufactured by casting;
b) a plate (12) of a laminate, comprising at least the metal of the blade (1') and a brazing material, is manufactured;
c) the plate (12) is brazed to the top of the side wall (2, 3) of the blade (1') by pressing the plate (12) onto the blade (1'); and
d) the recessed tip cap (7), comprising at least a bottom (8) and at least a squealer tip (9, 10), is machined in the plate (12).

2. Method according to Claim 1, in which the top of the wall (2, 3) of the blade (1') is ground before step c).

3. Method according to either of Claims 1 and 2, in which the outer surface of the squealer tip (9, 10) is machined after step d).

4. Method according to one of Claims 1 to 3, in which the top of the squealer tip (9, 10) is machined after step d).

5. Method according to one of Claims 1 to 4, in which step d) is carried out by electrical discharge machining.

6. Method according to one of Claims 1 to 5, in which the blade (1) is made of a nickel alloy.

7. Method of repairing the tip of a hollow metal blade (1), having at least one side wall (2, 3) and a recessed tip cap (7), which comprises at least a bottom (8) and at least a squealer tip (9, 10), **characterized in that** it comprises the steps of the manufacturing method of one of Claims 1 to 6, in which step a) is replaced by the following step:
a') the tip of the blade (1) is cut on a level with the bottom (8) of its recessed tip cap (7) so as to obtain a blade (1') having at least one side wall (2, 3), the tip of the blade being open.

## Patentansprüche

1. Verfahren zum Herstellen einer hohlen Metallschaufel (1) mit wenigstens einer Seitenwand (2, 3) und einer Spitze in Form einer Wanne (7), **dadurch** gekennzeichet daß:
a) durch Gießen eine Hohlschaufel (1') mit wenigstens einer Seitenwand (2, 3) hergestellt wird, deren Spitze offen ist;
b) eine Platte (12) aus einem Schichtmaterial mit wenigstens dem Metall der Schaufel (1') und einem Lötmaterial hergestellt wird;
c) die Platte (12) an die Spitze der Seitenwand (2, 3) der Schaufel (1') durch Unterdrucksetzen der Platte (12) an der Schaufel (1') gelötet wird; und
d) die Wanne (7) mit wenigstens einem Boden (8) und wenigstens einem Rand (9, 10) in der Platte (12) bearbeitet wird.

2. Verfahren nach Anspruch 1, bei welchem vor dem Schritt c) die Spitze der Wand (2, 3) der Schaufel (1') feingeschliffen wird.

3. Verfahren nach einem der Ansprüche 1 und 2, bei welchem nach dem Schritt d) die Außenfläche des Randes (9, 10) bearbeitet wird.

4. Verfahren nach einem der Ansprüche 1 bis 3, bei welchem nach dem Schritt d) die Spitze des Randes (9, 10) bearbeitet wird.

5. Verfahren nach einem der Ansprüche 1 bis 4, bei welchem der Schritt d) durch Funkenerosion durchgeführt wird.

6. Verfahren nach einem der Ansprüche 1 bis 5, bei welchem die Schaufel (1) aus einer Nickellegierung besteht.

7. Verfahren zur Reparatur der Spitze einer hohlen Metallschaufel (1) mit wenigstens einer Seitenwand (2, 3) und einer Spitze in Form einer Wanne (7), die wenigstens einen Boden (8) und wenigstens einen Rand (9, 10) aufweist, **dadurch gekennzeichnet, daß** es die Schritte des Herstellungsverfahrens eines der Ansprüche 1 bis 6 umfaßt, wobei der Schritt a) durch den folgenden Schritt ersetzt ist:
a') die Spitze der Schaufel (1) wird auf Höhe des Bodens (8) ihrer Wanne (7) derart ausgeschnitten, daß eine Schaufel (1') mit wenigstens einer Seitenwand (2, 3) erhalten wird, deren Spitze offen ist.
